(19) Europäisches Patentamt
European Patent Office
Office européen des brevets

(11) Veröffentlichungsnummer: **0 069 266**
**B1**

(12) # EUROPÄISCHE PATENTSCHRIFT

(45) Veröffentlichungstag der Patentschrift: **06.02.85**

(51) Int. Cl.⁴: **C 10 M 173/00**, B 01 F 17/00

(21) Anmeldenummer: **82105396.4**

(22) Anmeldetag: **19.06.82**

(54) **Emulgatoren für Metallbearbeitungsöle.**

(30) Priorität: **27.06.81 DE 3125297**

(43) Veröffentlichungstag der Anmeldung: **12.01.83 Patentblatt 83/2**

(45) Bekanntmachung des Hinweises auf die Patenterteilung: **06.02.85 Patentblatt 85/6**

(84) Benannte Vertragsstaaten: **AT BE CH DE FR GB IT LI NL SE**

(56) Entgegenhaltungen:
**EP-A-0 015 491**
**DE-A-2 844 272**

(73) Patentinhaber: **HOECHST AKTIENGESELLSCHAFT, Postfach 80 03 20, D-6230 Frankfurt am Main 80 (DE)**

(72) Erfinder: **Mees, Bernhard, Dr., Gräfliche Strasse 31, D-6239 Eppstein/Taunus (DE)**
Erfinder: **Lorke, Horst, Wachenheimer Strasse 14, D-6237 Liederbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 069 266 B1

ACTORUM AG

**Beschreibung**

Zur Herstellung emulgierbarer Metallbearbeitungsöle, die als wässerige Emulsionen insbesondere bei zerspanenden Arbeitsprozessen der Metallbearbeitung eingesetzt werden, dienen als Emulgatoren vielfach sogenannte Natriumpetrolsulfonate, d.h. Natriumsalze aromatischer Sulfonsäuren. Nachteile dieser bekannten Verbindungen sind die notwendig hohen Einsatzmengen dieser Emulgatoren, fehlende Schmierwirkung sowie die Anfälligkeit gegenüber Bakterien und Pilzen. Diese Nachteile gelten auch für die sekundären Alkansulfonate, die allein oder zusammen mit den Petrolsulfonaten als Emulgator für diesen Zweck eingesetzt werden können (EP-A Nr. 0015491). Die Schmierwirkung kann durch die Mitverwendung von chlorierten Paraffinen zwar verbessert werden (DE-A Nr. 2844272), doch sind diese Produkte nicht wasserlöslich, wodurch die Emulgatorwirkung beeinträchtigt wird. Eine gute Schmierwirkung und eine verbesserte Emulgierbarkeit lässt sich nunmehr erreichen, wenn man anstelle des chlorierten Paraffins dessen Mischung mit einem chlorierten Paraffinsulfonat nimmt.

Gegenstand der Erfindung sind verbesserte Emulgatoren, die bei ausgeprägter Emulgierwirkung gegenüber Mineralölen und hohem Korrosionsschutz gleichzeitig Schmierwirkung und bakteriostatische/bakterizide Effekte aufweisen, bestehend aus:

A) etwa 30 bis 50, vorzugsweise 40 bis 45 Gew.-% eines chlorierten Paraffinsulfonates im Gemisch mit einem anchlorierten Paraffin,

B) etwa 15 bis 30, vorzugsweise 20 bis 25 Gew.-% von Umsetzungsprodukten, die erhalten werden, wenn man Sulfochloride alkylaromatischer, cycloaliphatischer, alkylcycloaliphatischer oder vorzugsweise aliphatischer Kohlenwasserstoffe mit insgesamt 12 bis 24 C-Atomen mit Ammoniak oder primären niederen aliphatischen Aminen zu den entsprechenden Alkylsulfonamiden und danach mit Halogencarbonsäuren mit 2 bis 22 C-Atomen in Gegenwart von Alkali umgesetzt oder die genannten Sulfochloride in Gegenwart von Alkali mit Aminocarbonsäuren mit 2 bis 11 C-Atomen umsetzt, wobei die Umsetzungsprodukte nachträglich in Natrium-, Kalium-, Mono-, Di- oder Trialkanolaminsalze, Morpholinsalze oder Cyclohexylaminsalze überführt werden können,

C) etwa 15 bis 20, vorzugsweise 12 bis 17 Gew.-% einer oberflächenaktiven Verbindung der Formel:

$$R(CH_2CH_2O)_nH$$

wobei n eine Zahl von 3 bis 12 und R $C_{10}$-$C_{22}$-Alkanoyloxy oder -Alkenoyloxy, $C_8$-$C_{22}$-Alkoxy oder -Alkenoxy, $C_6$-$C_{16}$- Alkylphenyl, $C_6$-$C_{16}$-Alkynaphthyl oder Mono, Di- oder Tri-$C_8$-$C_{22}$-alkyl- oder -alkenylamin bedeutet, und

D) etwa 15 bis 25 Gew.-% eines Umsetzungsproduktes aus Mono- oder Diethanolamin, mit einer gesättigten oder ungesättigten aliphatischen Carbonsäure mit 12 bis 20 C-Atomen.

Die Emulgatorwirkung der oben beschriebenen Mischung beruht im wesentlichen auf der Wirkung der Komponente A. Die übrigen Komponenten bewirken demgegenüber mehr eine Korrosionsschutzwirkung.

Bei der Komponente A handelt es sich im wesentlichen um eine Mischung von Chlorparaffin und sekundärem Chloralkansulfonat mit einer Kettenlänge von jeweils 12 bis 17 C-Atomen, vorzugsweise im Verhältnis 55:45 und einem Chlorierungsgrad von 1,25 bis 5 mol Chlor, bezogen auf 1 mol des Gemisches. Man erhält diese Produkte duch Chlorierung des bei der Sulfoxidation von Paraffinen anfallenden Gemisches aus sekundären Alkansulfonat und nicht umgesetztem Paraffin.

Die Komponente B ist im wesentlichen eine Verbindung der Formel:

$$R-SO_2-\underset{\displaystyle |}{\overset{\displaystyle R_2}{N}}-(CH_2)_x-\overset{\displaystyle R_1}{\underset{|}{CH}}-COOY$$

wobei R einen alkylaromatischen, cycloaliphatischen, alkylcycloaliphatischen oder vorzugsweise einen aliphatischen Rest mit jeweils 12 bis 24 C-Atomen, $R_1$ Wasserstoff oder $CH_3$, $R_2$ Wasserstoff oder einen Alkyl- oder Oxyalkylrest mit bis zu 3 C-Atomen, oder den Rest:

$$-(CH_2)_n-\underset{\displaystyle R_1}{\underset{|}{CH}}-COOY$$

X eine Zahl von 0 bis 9 und Y Wasserstoff oder 1 Eq eines Alkali-, Alkanolamin- oder Morpholinkations bedeutet. Die Herstellung dieser Umsetzungsprodukte, ausgehend von den Sulfochlorierungsprodukten aliphatischer Kohlenwasserstoffe, kann z.B. nach dem Verfahren der DE-PS Nr. 767071 erfolgen. Als Alkylsulfochloride kommen in Betracht Dodecylbenzol-, Octylbenzol-, Isopropylnaphtahlin- oder Nonylnaphthalinsulfochlorid.

Als Komponente C kommen solche nichtionogenen oberflächenaktiven Verbindungen in Betracht, die im Molekül 3 bis 12 Ethylenoxideinheiten und einen hydrophoben Kohlenwasserstoffrest enthalten. Geeignete nichtionogene Verbindungen dieser Art sind z.B. die Anlagerungsverbindungen von etwa 6 bis 10, insbesondere 8 bis 9 mol Ethylenoxid an 1 mol einer gesättigten oder ungesättigte Fettsäure mit etwa 10 bis 12 C-Atomen, insbesondere einer ungesättigten Fettsäure mit 16 bis 18 C-Atomen; die Anlagerungsprodukte von etwa 4 bis 10, vorzugsweise 5 bis 6 mol Ethylenoxid an 1 mol eines gesättigten oder ungesättigten Fettalkohols mit etwa 8 bis 20 C-Atomen, insbesondere eines ungesättigten Fettalkohols mit 16 bis 18 C-Atomen; die Anlagerungsprodukte von etwa 4 bis 12, insbesondere 6 bis 8 mol Ethylenoxid an 1 mol eines Alkylphenols oder eines Alkylnaphthols, wobei die Alkylreste etwa 6 bis 16, vorzugsweise 8 bis 12 C-Atome umfassen können und geradkettig oder verzweigt sein können, sowie die Umsetzungsprodukte von etwa 3 bis 10, vorzugsweise 5 bis 7 mol Ethylenoxid mit 1 mol eines primären, sekundären oder tertiären gesättigten oder ungesättigten Alkylamins mit 8 bis 22, vorzugsweise 14 bis 18 C-Atomen im Alkylrest. Der Anteil der Komponente C in dem Konzentrat beträgt vorzugsweise 15 Gew.-%.

Bei der Komponente D der Metallbearbeitungsöle gemäss der Erfindung handelt es sich um Gemische, die im wesentlichen bestehen aus etwa 40 bis 70, vorzugsweise 50 bis 60 Gew.-% von Verbindungen der Formel:

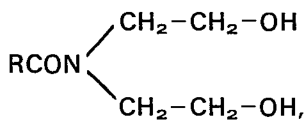

sowie Anteilen von etwa 10 bis 50, vorzugsweise 20 bis 40 Gew.-% an Verbindungen der Formel:

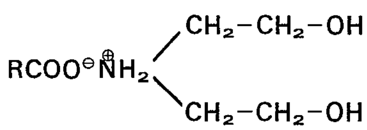

und einem restlichen Anteil von etwa 10 bis 20 Gew.-% von Verbindungen der Formel VII:

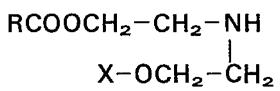

In diesen Formeln bedeutet R einen Alkyl- oder Alkenylrest mit 12 bis 20 C-Atomen und X Wasserstoff oder den Rest −OCR. Die Komponente D ist in dem Metallbearbeitungsöl gemäss der Erfindung vorzugsweise in einem Anteil von 20 Gew.-% enthalten.

Die Komponente D wird erhalten durch Umsetzung von 1 mol einer gesättigten oder ungesättigten Fettsäure mit 12 bis 20, vorzugsweise 16 bis 18 C-Atomen und etwa 1 bis 3, vorzugsweise 2 mol Mono- oder Diethanolamin. Die Umsetzung kann so durchgeführt werden, dass man die beiden Komponenten vermischt und während etwa 3 bis 6 h auf etwa 100 bis 160, vorzugsweise 120 bis 150°C erhitzt.

Die Metallbearbeitungsöle gemäss der Erfindung können neben den Komponenten A, B, C und D ausserdem in gewissem Umfang noch weitere Hilfs- und Zusatzstoffe enthalten, die der Entschäumung und Stabilität der Emulsion dienen. Solche Mittel sind z.B. Silikonölemulsionen und Petroleum. Auch ein Zusatz von Fettsäuren, die ihrerseits entschäumend wirkende Kalkseifen bilden, hat sich oft als zweckmässig erwiesen. Fettsäure, d.h. die daraus gebildeten Salze, fördert ferner die Spontanität der Emulsionsbildung und die Stabilität der Emulsion selbst. Diese Produkte können bereits dem Emulgator, d.h. dem Gemisch der Komponenten A bis D, zugemischt werden.

Zur Anwendung werden die Emulgatoren in Mengen von 15 bis 60, vorzugsweise 20 oder 50 Gew.-%, gemischt- oder paraffinbasischen Mineralölen zugesetzt. Diese sogenannten Metallbearbeitungsöle werden mit Wasser im Verhältnis 1:20 bis 1:100, vorzugsweise 1:30 verdünnt. Die Emulsionen dienen zum Kühlen, Schmieren und dem Korrosionsschutz bei der Zerspannung von Nichteisenmetallen (Schwermetalle und Leichtmetalle), z.B. beim Schneiden, Bohren, Fräsen, Drehen, Schleifen u. dgl.

Die vorteilhaft hohe Schmierwirkung der unter A beschriebenen Chloralkansulfonate und Chlorparaffine im Vergleich zu nativen oder synthetischen Petrolsulfonaten zeigt sich in nachstehenden Ergebnissen. Zur Bestimmung der Schmierwirkung wurden 10 bis 20%ige wässerige Lösungen dieser Produkte hergestellt und auf der Reibverschleisswaage nach Reichert die spezifische Flächenpressung in Bar als Mass für die Schmierwirkung gemessen:

Produkt I: natives Petrolsulfonat Na-MG 430
Produkt II: synthetisches Petrolsulfonat Na-MG 430
Produkt III: Paraffin-($C_{12}$-$C_{17}$)Sulfonat
Produkt IV: Paraffin-($C_{12}$-$C_{17}$)Sulfonat mit 2,5 mol Cl
Produkt V: Paraffin-($C_{12}$-$C_{17}$)Sulfonat mit 5 mol Cl

| Produkt Nr. | 10%ige wässerige Lösung (bar) | 20%ige wässerige Lösung (bar) |
|---|---|---|
| I | 135 | 170 |
| II | 120 | 160 |
| III | 200 | 300 |
| IV | 270 | 350 |
| V | 320 | 400 |

Die vorteilhaft hohe und für die Gebrauchsdauer wichtige Stabilität der erfindungsgemäsen Emulsionen gegenüber Bakterien und Pilzen ergibt sich aus dem nachstehend beschriebenen Vergleich zu Emulsionen, die mit Petrolsulfonaten als Emulgatoren hergestellt wurden:

Metallbearbeitungsöl A (Vergleichsprodukt)
80 Gew.-% Mineralöl bestehend aus
50 bis 70% Paraffinen
25 bis 30 % Naphthenen
0 bis 25% Aromaten
Viskosität 3 bis 5°E/20°C
20 Gew.-% Emulgator bestehend aus
35% synthetisches oder natives Petrolsulfonat (ca. 62% WS) Na-MG 420
15% Natrium/Triethanolammoniumsalz einer Alkylsulfonamidoessigsäure
15% Nonylphenol + 6 mol Ethylenoxid
15% Tallölfettsäurediethanolamid
15% Ölsäure techn.
5% Kalilauge (50%ig)

Metallbearbeitungsöl B (erfindungsgemäss)
80 Gew.-% Mineralöl bestehend aus
50 bis 70% Paraffinen
25 bis 30% Naphthenen
0 bis 25% Aromaten
20 Gew.-% Emulgator bestehend aus

35% Chlor-$C_{12}$-$C_{17}$-paraffinsulfonat-Na-Salz und Chlor-$C_{12}$-$C_{17}$-Paraffin (ca. 45% WS) Chlorgehalt 2,5 mol

15% Natrium/Triethanolammoniumsalz einer $C_{13}$-$C_{18}$-Alkylsulfonamidoessigsäure

15% Nonylphenol + 6 mol Ethylenoxid

15% Umsetzungsprodukt aus Tallölfettsäure und Diethanolamin

15% Ölsäure techn.

5% Kalilauge (50%ig)

Aus den aufgeführten Metallbearbeitungsölen wurden 3%ige Emulsionen hergestellt, die nach 24stündigem Stehen bei 20°C keine Veränderungen aufwiesen. Dies gilt auch für Metallbearbeitungsöl B, dessen Emulgator einen geringen Gehalt an Komponente A aufweist. Die 3%igen Emulsionen wurden Belastungsproben gegenüber Mikroorganismen ausgesetzt. Jeweils bei Beginn, nach 1, 7, 14, 21 und 28 d wurden die Keimzahlen pro Milliliter Emulsion durch Auszählen bestimmt.

| Metallbearbeitungsöl | Keimzahl nach (d) | Bohrmittelstamm (*) | *Escherichia coli* | *Candida albicans* |
|---|---|---|---|---|
| A | Beginn | $10^6$ | $10^6$ | $10^5$ |
| | 1 | $10^6$ | $10^6$ | $10^5$ |
| | 7 | $10^6$ | $10^6$ | $10^5$ |
| | 14 | $10^6$ | $10^6$ | $10^5$ |
| | 21 | $10^5$ | $10^4$ | $10^5$ |
| | 28 | $10^5$ | $10^4$ | $10^5$ |
| B | Beginn | $10^5$ | $10^5$ | $10^5$ |
| | 1 | $10^5$ | $10^4$ | $10^5$ |
| | 7 | $10^4$ | $10^4$ | $10^4$ |
| | 14 | $10^4$ | $10^3$ | $10^3$ |
| | 21 | $10^4$ | $10^2$ | $10^3$ |
| | 28 | $10^3$ | $10^2$ | $10^3$ |

(*) gramnegativer Bakterienstamm ähnlich *Pseudomonas aeroginosa*

Hinsichtlich biologischer Abbaufähigkeit gelten Natriumpetrolsulfonate nach dem Zahn-Wellens-Test als schlecht und chlorierte Paraffinsulfonate als gut abbaufähig.

Beispiele zur Herstellung der Komponente A:

*Beispiel 1:*

1400 Gew.-Teile eines gebleichten Konzentrates, welches man durch Sulfoxidation eines Paraffins der Kettenlänge $C_{12}$-$C_{17}$ erhält, und welches folgende Zusammensetzung besitzt:

38,2% sekundäre Alkansulfonsäure

1,6% Schwefelsäure

53,3% Paraffin ($C_{12}$-$C_{17}$)

6,9% Wasser

werden in einem Chlorierungsgefäss vorgelegt und unter Rühren und UV-Katalyse bei 80°C mit 1600 Gew.-Teilen gasförmigen Chlor chloriert, wobei das entstehende HCl-Gas über einen Kühler entweicht. Anschliessend gibt man das chlorierte Produkt in einen heizbaren Scheidetrichter und entfernt die noch vorhandene Schwefelsäure durch Ausrühren mit 300 Gew.-Teilen konzentrierter Salzsäure. Nach dem Ausrühren destilliert man überschüssige Salzsäure im Vakuum aus dem Reaktionsprodukt und neutralisiert dann mit 140 Gew.-Teilen 50%iger Natronlauge bis auf pH 3 bis 4. Das übrige Wasser wird im Vakuum bei 60 bis 70°C bis zu einem Restwassergehalt unter 1% abgezogen. Mit etwa 30 Gew.-Teilen Triethanolamin stellt man den End-pH von etwa 7,5 bis 8 ein und erhält so ca. 2150 Gew.-Teile des Emulgators in Form einer braunen, noch giessbaren Flüssigkeit und mit einem Chlorierungsgrad von etwa 2,5 mol Chlor pro Mol Alkansulfonsäure.

*Beispiel 2:*

1400 Gew.-Teile eines gebleichten Konzentrates gemäss Beispiel 1 werden entsprechend den Bedingungen in Beispiel 1 mit 800 Gew.-Teilen Chlorgas chloriert. Nach der entsprechenden Abtrennung der überschüssigen Schwefelsäure mit wässeriger Salzsäure und anschliessendem Destillieren von HCl wird wieder mit 145 Gew.-Teilen 50%iger Natronlauge neutralisiert. Dann destilliert man Restwasser ab bis zu einem Gehalt < 1%. Man erhält so 1725 Gew.-Teile eines hellbraunen pastösen Emulgators, der in seinen Emulgiereigenschaften und Korrosionsschutzeigenschaften dem Emulgator aus Beispiel 1 entspricht. Der Chlorierungsgrad liegt bei 1,25 mol Chlor pro Mol Alkansulfonsäure.

*Beispiel 3:*

2330 Gew.-Teile eines Vierkomponentensystems, welches bei der Sulfoxidation eines Paraffins der Kettenlänge $C_{12}$-$C_{17}$ anfällt und welches folgende Zusammensetzung besitzt:

32% Paraffin ($C_{12}$-$C_{17}$)

38% Wasser

22% sekundäre Alkansulfonsäure

8% Schwefelsäure

werden in einem Chlorierungsgefäss und unter Rühren und UV-Katalyse bei 100°C mit 1600 Gew.-Teilen gasförmigem Chlor chloriert, wobei die entstehende HCl über einen Kühler entweicht. Nach Beendigung der Reaktion wird auf 80°C abgekühlt und die wässerigen Säuren als Unterphase abgelassen. Reste von Salzsäure, die noch in der Oberphase vorhanden sind, werden duch Durchblasen von Stickstoff entfernt. Anschliessend neutralisiert man bei 50°C mit 145 Gew.-Teilen Natronlauge und zieht überschüssiges Wasser im Vakuum ab. Man erhält so 2100 Gew.-Teile eines giessbaren, hellbraunen Emulgators mit einem Chlorierungsgrad von 2,5 mol.

*Beispiel 4:*

2330 Gew.-Teile des Vierkomponentensystems aus dem Beispiel 3 werden entsprechend dem Beispiel 3 mit 3200 Gew.-Teilen Chlorgas chloriert. Nach dem Abtrennen der wässerigen Unterphase und dem Ausblasen von HCl-Gas wird mit 150 Gew.-Teilen 50%iger Natronlauge bei 50°C die Oberphase neutralisiert und überschüssiges Wasser im Vakuum abgezogen. Man erhält 2100 Gew.-Teile eines dunkelbraunen, gut giessbaren Emulgators mit einem Chlorierungsgrad von 5 mol Chlor.

Im folgenden werden weitere erfindungsgemässe Emulgatoren aufgeführt. Man erhält sie in allen Fällen durch einfaches Mischen aller Komponenten.

*A*

55% Chlor-$C_{12}$-$C_{17}$-paraffinsulfonat-Na-Salz und Chlor-$C_{12}$-$C_{17}$-paraffin (Chlorgehalt 1,5 mol)

15% Natrium/Triethanolammoniumsalz einer $C_{13}$-$C_{18}$-Alkylsulfonamidoessigsäure

15% Oleylamin + 5 mol Ethylenoxid

20% Umsetzungsprodukt aus Tallölfettsäure und Diethanolamin

*B*

50% Chlor-$C_{12}$-$C_{17}$-paraffinsulfonat-Na-Salz und Chlor-$C_{12}$-$C_{17}$-paraffin (Chlorgehalt 1,5 mol)

20% Natrium/Triethanolammoniumsalz einer $C_{13}$-$C_{18}$-Alkylsulfonamidoessigsäure

10% Ölsäure + 7 mol Ethylenoxid

20% Umsetzungsprodukt aus Sojaölfettsäure und Diethanolamin

*C*

40% Chlor-$C_{12}$-$C_{17}$-paraffinsulfonat-Na-Salz und Chlor-$C_{12}$-$C_{17}$-paraffin (Chlorgehalt 2,5 mol)

25% Natrium/Triethanolammoniumsalz einer $C_{13}$-$C_{18}$-Alkylsulfonamidoessigsäure

15% Nonylphenol + 6 mol Ethylenoxid

20% Umsetzungsprodukt aus Sonnenblumenölfettsäure und Diethanolamin.

*D*

40% Chlor-$C_{12}$-$C_{17}$-paraffinsulfonat-Na-Salz und Chlor-$C_{12}$-$C_{17}$-paraffin (Chlorgehalt 2,5 mol)

25% Natrium/Triethanolammoniumsalz einer $C_{13}$-$C_{18}$-Alkylsulfonamidoessigsäure

15% Ölsäure + 7 mol Ethylenoxid

20% Umsetzungsprodukt aus Tallölfettsäure und Diethanolamin.

*E*

30% Chlor-$C_{12}$-$C_{17}$-paraffinsulfonat-Na-Salz und Chlor-$C_{12}$-$C_{17}$-paraffin (Chlorgehalt 5 mol)

30% Natrium/Triethanolammoniumsalz einer $C_{13}$-$C_{18}$-Alkylsulfonamidoessigsäure

20% Nonylphenol + 6 mol Ethylenoxid

20% Umsetzungsprodukt aus Tallölfettsäure und Diethanolamin

*F*

30% Clor-$C_{12}$-$C_{17}$-paraffinsulfonat-Na-Salz und Chlor-$C_{12}$-$C_{17}$-paraffin (Chlorgehalt 5 mol)

30% Natrium/Triethanolammoniumsalz einer $C_{13}$-$C_{18}$-Alkylsulfonamidoessigsäure

20% Oleylamin + 5 mol Ethylenoxid

20% Umsetzungsprodukt aus Sojaölfettsäure und Diethanolamin.

## Patentansprüche

1. Emulgatoren für Metallbearbeitungsöle auf der Basis von:

A) Umsetzungsprodukten, die erhalten werden, wenn man Sulfochloride alkylaromatischer, cycloaliphatischer, alkylcycloaliphatischer oder vorzugsweise aliphatischer Kohlenwasserstoffe mit insgesamt 12 bis 24 C-Atomen mit Ammoniak oder primären niederen aliphatischen Aminen zu den entsprechenden Alkylsulfonamiden und danach mit Halogencarbonsäuren mit 2 bis 22 C-Atomen in Gegenwart von Alkali umgesetzt oder die genannten Sulfochloride in Gegenwart von Alkali mit Aminocarbonsäuren mit 2 bis 11 C-Atomen umsetzt, wobei die Umsetzungsprodukte nachträglich in Natrium-, Kalium-, Mono-, Di- oder Trialkanolaminsalze, Morpholinsalze oder Cyclohexylaminsalze überführt werden können,

B) einer oberflächenaktiven Verbindung der Formel:

$$R(CH_2CH_2O)_nH$$

wobei n eine Zahl von 3 bis 12 und R $C_{10}$-$C_{22}$-Alkanoyloxy oder -Alkenoyloxy, $C_8$-$C_{22}$-Alkoxy oder -Alkenoxy, $C_6$-$C_{16}$-Alkylphenyl, $C_6$-$C_{16}$-Alkylnaphthyl oder Mono-, Di- oder Tri-$C_8$-$C_{22}$-alkyl- oder -alkenylamin bedeutet, und

C) einem Chlorparaffin,

dadurch gekennzeichnet, dass die Emulgatoren aus 15 bis 30 Gew.-% der Komponente A, 12 bis 20 Gew.-% der Komponente B, 15 bis 25 Gew.-% eines Umsetzungsproduktes aus Mono- oder Diethanolamin mit einer gesättigten oder ungesättigten aliphatischen Carbonsäure mit 12 bis 20 C-Atomen und 30 bis 50 Gew.-% einer Mischung des Chlorparaffins mit einem chlorierten Paraffinsulfonat bestehen.

2. Emulgatoren nach Anspruch 1, dadurch gekennzeichnet, dass sie aus 20 bis 25 Gew.-% der Komponente A, 12 bis 17 Gew.-% der Komponente B, 20 Gew.-% des Umsetzungsproduktes aus Mono- oder Diethanolamin mit einer aliphatischen Carbonsäure und 40 bis 45 Gew.-% der Mischung des Chlorparaffins mit einem chlorierten Paraffinsulfonat bestehen.

## Claims

1. Emulsifiers for metal processing oils on the base of

(*A*) reaction products obtained by converting sulfochlorides of alkylaromatic, cycloaliphatic, alkylcycloaliphatic or, preferably, aliphatic hydrocarbons having a total of 12 to 24 carbon atoms to the corresponding alkylsulfonamides with the use of ammonia or primary lower aliphatic amines and subsequently reacting these alkylsulfonamides with halocarboxylic acids having from 2 to 22 carbon atoms in the presence of alkali, or by reacting the above sulfochlorides with aminocarboxylic acids having from 2 to 11 carbon atoms in the presence of alkali; the reaction products optionally being converted subsequently to the sodium, potassium, mono-, di- or trialkanolamine salts, morpholine salts or cyclohexylamine salts

(*B*) a surface-active compound of the formula

$$R(CH_2CH_2O)_nH$$

in which n is an integer of from 3 to 12 and R is $C_{10}$-$C_{22}$-alkanoyloxy or -alkenoyloxy, $C_8$-$C_{22}$-alkoxy or -alkenoxy, $C_6$-$C_{16}$-alkylphenyl, $C_6$-$C_{16}$-alkylnaphthyl, or mono-, di- or tri-$C_8$-$C_{22}$-alkyl- or -alkenylamine, and

(*C*) chlorinated paraffin,
characterized in that the emulsifiers consist of 15 to 30% by weight of component A, 12 to 20% by weight of component B, 15 to 25% by weight of a reaction product of mono- or diethanolamine with a saturated or unsaturated aliphatic carboxylic acid having from 12 to 20 carbon atoms, and 30 to 50% by weight of a mixture of the chlorinated paraffin with a chlorinated paraffin sulfonate.

2. Emulsifiers as claimed in Claim 1, which consist of 20 to 25% by weight of component A, 12 to 17% by weight of component B, 20% by weight of the reaction product of mono- or diethanolamine with an aliphatic carboxylic acid, and 40 to 45% by weight of the mixture of chlorinated paraffin with chlorinated paraffin sulfonate.

## Revendications

1. Emulsionnants pour huiles d'usinage des métaux à base

A) de produits de réaction qui sont obtenus lorsqu'on fait réagir des sulfochlorures d'hydrocarbures alkylaromatiques, cycloaliphatiques, alkylcycloaliphatiques ou de préférence aliphatiques ayant au total 12 à 24 atomes de carbone avec de l'ammoniac ou des amines aliphatiques primaires inférieures pour donner les alkylsulfonamides correspondants, puis avec des acides halogénocarboxyliques ayant 2 à 22 atomes de carbone en présence d'alcali, ou on fait réagir ces sulfochlorures en présence d'un alcali avec des acides aminocarboxyliques en $C_2$ à $C_{11}$, les produits de la réaction pouvant être transformés ultérieurement en sels de sodium, de potassium, de mono-, di- ou trialcanolamine, en sels de morpholine ou en sels de cyclohexylamine,

B) d'un composé tensio-actif répondant à la formule:

$$R(CH_2CH_2O)_nH$$

dans laquelle n désigne un nombre de 3 à 12 et R un radical alcanoyloxy ou alcénoloxy en $C_{10}$-$C_{22}$, alcoxy ou alcénoxy en $C_8$-$C_{22}$, (alkyle en $C_6$-$C_{16}$)phényle, (alkyle en $C_6$-$C_{16}$)naphtyle ou mono-, di- ou tri(alkyle ou alcénylamine en $C_8$-$C_{22}$), et

C) d'une chloroparaffine,
caractérisés en ce que les émulsionnants se composent de 15 à 30% en poids du constituant A, 12 à 20% en poids du constituant B, 15 à 25% en poids d'un produit de réaction de la mono- ou de la diéthanolamine avec un acide carboxylique aliphatique saturé ou insaturé en $C_{12}$ à $C_{20}$, et de 30 à 50% en poids d'un mélange de la chloroparaffine avec un paraffinesulfonate chloré.

2. Emulsionnants suivant la revendication 1, caractérisés en ce qu'ils se composent de 20 à 25% en poids du constituant A, 12 à 17% en poids du constituant B, 20% en poids du produit de la réaction de la mono- ou de la diéthanolamine avec un acide carboxylique aliphatique, et de 40 à 45% en poids du mélange de la chloroparaffine avec un paraffinesulfonate chloré.